# EUROPEAN PATENT APPLICATION

(11) **EP 4 529 357 A1**
(43) Date of publication of application: **26.03.2025**
(21) Application number: 24197996.2
(22) Date of filing: 02.09.2024
(51) Int. Cl.: H05B 47/105

(54) **AN EMERGENCY LIGHTING SYSTEM**

(30) Priority: 25.09.2023 GB 202314667
(71) Applicant: F.W. Thorpe Public Limited Company, Redditch Worcestershire B98 9HH (GB)
(72) Inventor: Meaking, Andrew, Redditch, B98 9HH (GB)
(74) Representative: Swindell & Pearson Limited

(57) **Abstract**

An emergency lighting system comprising: one or more fluorescent emergency lighting system indicators configured to emit visible light in response to absorbing ultraviolet light; one or more ultraviolet light sources configured to emit ultraviolet light and illuminate the one or more fluorescent emergency lighting system indicators; and a controller configured to control the one or more ultraviolet light sources to emit ultraviolet light.

## Description

### TECHNOLOGICAL FIELD

Examples of the disclosure relate to an emergency lighting system. Some relate to an emergency lighting system for use when a mains power supply has been interrupted.

### BACKGROUND

Emergency lighting systems may be used in an environment to provide illumination for safe evacuation from the environment when normal lighting systems in the environment fail (e.g., due to an interruption of the main power supply of the normal lighting system).

### BRIEF SUMMARY

According to various, but not necessarily all, examples there is provided an emergency lighting system comprising: one or more fluorescent emergency lighting system indicators configured to emit visible light in response to absorbing ultraviolet light; one or more ultraviolet light sources configured to emit ultraviolet light and illuminate the one or more fluorescent emergency lighting system indicators; and a controller configured to control the one or more ultraviolet light sources to emit ultraviolet light.

According to various, but not necessarily all, examples there is provided an emergency lighting system comprising: one or more ultraviolet light sources configured to emit ultraviolet light and illuminate one or more fluorescent emergency lighting system indicators; and a controller configured to control the one or more ultraviolet light sources to emit ultraviolet light.

According to various, but not necessarily all, examples there is provided an emergency lighting system comprising: one or more emergency lighting system indicators configured to emit visible light in response to absorbing ultraviolet light; one or more ultraviolet light sources configured to emit a sequence of ultraviolet light pulses, the ultraviolet light pulses being configured to illuminate the one or more emergency lighting system indicators; and a controller configured to control the sequence of ultraviolet light pulses.

According to various, but not necessarily all, examples there is provided examples as claimed in the appended claims.

The following portion of this 'Brief Summary' section, describes various features that may be features of any of the examples described in the foregoing portion of the 'Brief Summary' section. The description of a function should additionally be considered to also disclose any means suitable for performing that function.

The emergency lighting system may comprise a sensor configured to detect an emergency.

The emergency may comprise an interruption of a mains power supply.

The controller may be configured to control the one or more ultraviolet light sources to emit ultraviolet light in response to receiving input from the sensor that is indicative of an emergency.

The controller may be configured to activate the one or more ultraviolet light sources in response to receiving the input.

The one or more ultraviolet light sources may comprise at least one of: an ultraviolet light emitting diode (LED) or an ultraviolet lamp. The one or more ultraviolet light sources may be ultraviolet light emitting diodes (LEDs).

The one or more ultraviolet light sources may comprise a filter configured to filter visible light.

The filter may be a band-pass filter.

The one or more fluorescent emergency lighting indicators may comprise at least one of: a marker; tape; paint; or an emergency equipment.

The one or more ultraviolet light sources may be configured to emit a sequence of ultraviolet light pulses, the ultraviolet light pulses may be configured to illuminate the one or more fluorescent emergency lighting system indicators; and the controller may be configured to control the sequence of ultraviolet light pulses.

The sequence of ultraviolet light pulses may comprise each pulse being for the same time period and/or each interval between the pulses being for the same time period.

The frequency of the sequence may be less than or equal to 60 hertz.

The controller may comprise at least one processor; and at least one memory including computer program code may be configured to, with the at least one processor, cause the one or ultraviolet light sources to emit the sequence of ultraviolet light pulses.

The emergency lighting system may comprise an auxiliary electrical power supply configured to provide electrical power to the one or more ultraviolet light sources.

The auxiliary electrical power supply may comprise one or more batteries configured to be charged by a mains power supply.

The controller may be configured to control the one or more ultraviolet light sources to conserve the auxiliary electrical power supply.

The emergency lighting system may comprise a sensor configured to detect the remaining capacity of the auxiliary electrical power supply.

The controller may be configured to reduce the illuminance of the one or more ultraviolet light sources to conserve the auxiliary electrical power supply.

The controller may be configured to reduce the frequency of the pulses of ultraviolet light to conserve the auxiliary electrical power supply.

The emergency lighting system may comprise one or more visible light sources configured to continuously illuminate the one or more fluorescent emergency lighting system indicators.

The one or more visible light sources may have an illuminance of at least 5 lux.

The auxiliary electrical power supply may be configured to provide electrical power to the one or more visible light sources and the controller may be configured to adjust the illuminance of the one or more visible light sources to conserve the auxiliary electrical power supply.

While the above examples of the disclosure and optional features are described separately, it is to be understood that their provision in all possible combinations and permutations is contained within the disclosure. It is to be understood that various examples of the disclosure can comprise any or all of the features described in respect of other examples of the disclosure, and vice versa. Also, it is to be appreciated that any one or more or all of the features, in any combination, may be implemented by/comprised in/performable by an apparatus, a method, and/or computer program instructions as desired, and as appropriate.

### BRIEF DESCRIPTION

Some examples will now be described with reference to the accompanying drawings in which:
FIG. 1 shows a schematic of an emergency lighting system;
FIG. 2 shows a schematic of a controller of an emergency lighting system;
FIG. 3 shows a schematic of an emergency lighting system;
FIG. 4 shows an example environment having an emergency lighting system;
FIG. 5 shows an example environment having an emergency lighting system; and
FIG. 6 shows an example environment having emergency lighting system indicators.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

### DETAILED DESCRIPTION

When evacuating an environment (e.g., a building or a vehicle), one or more ultraviolet light sources configured to emit ultraviolet light may be used to illuminate one or more fluorescent emergency lighting system indicators. The one or more fluorescent emergency lighting system indicators may be configured to emit visible light in response to absorbing ultraviolet light. The one or more ultraviolet light sources emitting ultraviolet light and illuminating the one or more fluorescent emergency lighting system indicators may cause the one or more fluorescent emergency lighting system indicators to emit visible light thereby improving the visibility of the one or more fluorescent emergency lighting system indicators to a user (e.g., a person evacuating the environment).

The one or more ultraviolet light sources may be configured to emit ultraviolet light pulses. The one or more ultraviolet light sources emitting ultraviolet light pulses may cause the one or more fluorescent emergency lighting system indicators to emit pulses of visible light. The one or more emergency lighting system indicators emitting pulses of visible light may cause the appearance of the one or more fluorescent emergency lighting system indicators to be flashing (rather than being continuously illuminated) thereby improving the visibility of the one or more emergency lighting system indicators to users (e.g., partially sighted users).

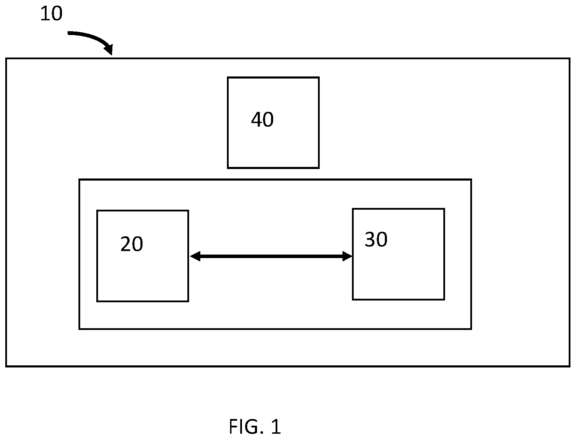

FIG. 1 shows a schematic of an emergency lighting system 10. The emergency lighting system 10 comprises an ultraviolet light source 20, a controller 30 and a fluorescent emergency lighting system indicator 40. It should be understood that throughout the description references to a single element of the emergency lighting system 10 (e.g., the light source 20 or the fluorescent emergency lighting system indicator 40) may also be the emergency lighting system comprising one or more of those elements (e.g., the emergency lighting system 10 may comprise one or more ultraviolet light sources 20 and/or one or more fluorescent emergency lighting system indicators 40). It should be understood that the emergency lighting system 10 may comprise any suitable number of ultraviolet light sources 20 and/or fluorescent emergency lighting system indicators 40.

The ultraviolet light source 20 is configured to emit ultraviolet light and illuminate the fluorescent emergency lighting system indicator 40. The emergency lighting system indicator 40 is described in detail below.

The ultraviolet light source 20 may comprise at least one of: an ultraviolet light emitting diode (LED) or an ultraviolet lamp. Ultraviolet light is considered as electromagnetic radiation with a wavelength of from 10 nm to 400 nm. The light emitted by the ultraviolet light source 20 may have a wavelength of 100 nm to 400 nm. The light emitted by the ultraviolet light source 20 may have a wavelength of 300 nm to 400 nm.

The ultraviolet light source 20 may comprise a light source in which the majority of the light emitted from the light source is ultraviolet light (as determined by spectral radiant flux measurements using a spectroradiometer). For example, the ultraviolet light source 20 may predominately emit ultraviolet light but may also emit some light in other ranges. For example, the ultraviolet light source 20 may also emit a small amount of visible light.

In examples where the ultraviolet light source 20 emits light outside the ultraviolet range, the ultraviolet light source 20 may comprise a filter configured to block, or at least partially block, the light outside of the ultraviolet range. For example, if the ultraviolet light source 20 also emits some visible light, the filter can be configured to block, or at least partially block, the visible light. Blocking unwanted light, such as visible light, can prevent the ultraviolet light source 20 emitting visible light to the fluorescent emergency lighting system indicator 40. Emitting visible light (i.e., in addition to ultraviolet light) to a fluorescent emergency lighting system indicator 40 may reduce the visibility of the fluorescent emergency lighting system indicator 40 in comparison to an ultraviolet light source 20 emitting only ultraviolet light to the fluorescent emergency lighting system indicator 40 and may therefore be undesirable.

The filter may be configured to filter the majority of the visible light or other light outside of the ultraviolet range. The filter may be a band-pass filter or any other suitable type of filter.

The ultraviolet light source 20 may comprise any suitable ultraviolet light source for emitting a sequence of ultraviolet light pulses. As mentioned above, the fluorescent emergency lighting system indicator 40 emitting pulses of visible light (rather than continuously emitting visible light) improves the visibility of the fluorescent emergency lighting system indicator 40 to users. This may be achieved by the ultraviolet light source 20 emitting a sequence of ultraviolet light pulses (e.g., rather than continuously emitting ultraviolet light). An ultraviolet light pulse may be a (short) burst of ultraviolet light. A sequence of ultraviolet light pulses may be a plurality of (short) bursts of ultraviolet light. An ultraviolet light pulse may be caused by a pulse of electrical current being applied to the ultraviolet light source 20 (e.g., by the controller 30).

The sequence of ultraviolet light pulses may comprise each pulse being for the same time period and/or each interval between the pulses being for the same time period. For example, each burst of ultraviolet light may be for the same duration of time and/or each interval between the burst of ultraviolet light may be for the same duration of time.

The ultraviolet light source 20 may be configured to emit pulses of ultraviolet light at any suitable frequency to which subsequent visible light would be visible to a user (i.e., a user seeing an emergency lighting system indicator emitting visible light in response to receiving at least part of the sequence of ultraviolet light pulses would be able to see that emergency lighting system indicator 40 flashing rather than continuously emitting visible light).

The frequency of the sequence of ultraviolet pulses may be configurable (e.g., via the controller 30). The frequency of the sequence of ultraviolet pulses may be less than or equal to 60 hertz. The frequency of the sequence of ultraviolet pulses may be less than or equal to 50 hertz. The frequency of the sequence of ultraviolet pulses may be less than or equal to 20 hertz. The frequency of the sequence of ultraviolet pulses may be less than or equal to 5 hertz. The frequency of the sequence of ultraviolet pulses may be less than or equal to 2 hertz. The frequency of the sequence of ultraviolet pulses may be less than or equal to 1 hertz. The frequency of the sequence of ultraviolet pulses may be less than or equal to 0.5 hertz. The frequency of the sequence of ultraviolet pulses may be less than or equal to 0.1 hertz.

The ultraviolet light source 20 emitting a sequence of ultraviolet pulses at a frequency of 1 hertz may emit one ultraviolet pulse per second. The ultraviolet light source 20 emitting a sequence of ultraviolet pulses at a frequency of 2 hertz may emit two ultraviolet pulses per second.

As mentioned above, the emergency lighting system 10 comprises a controller 30 configured to control the ultraviolet light source 20. The controller 30 may be configured to control the ultraviolet light source 20 to emit ultraviolet light in response to receiving input from a sensor (not shown in FIG. 1) that is indicative of an emergency (e.g., an interruption to a mains power supply).

The controller 30 may be configured to activate the ultraviolet light source 20 in response to the input. For example, the controller 30 may comprise a switch. The switch may be at least one of: a mechanical switch, a tilt switch or an electromagnetic switch. The electromagnetic switch may be a relay.

The controller 30 may be any suitable controller 30 for controlling the sequence of ultraviolet light pulses (e.g., a microprocessor or a microcontroller). For example, the controller 30 may comprise mechanical circuitry configured to control the sequence of ultraviolet light pulses. The controller 30 may comprise electromagnetic circuitry to control the sequences of ultraviolet light pulses. The controller 30 may comprise an integrated circuit to control the sequence of ultraviolet light pulses. The integrated circuit may comprise a timer. For example, the integrated circuit may be a 555 timer.

As is described in more detail below, the controller 30 may be implemented in software.

Additionally, or alternatively, the controller 30 may comprise at least one processor; and at least one memory including computer program code configured to, with the at least one processor, control the ultraviolet light source 20 to emit ultraviolet light. The controller 30 may comprise at least one processor; and at least one memory including computer program code configured to, with the at least one processor, cause the ultraviolet light source 20 to emit the sequence of ultraviolet light pulses.

The fluorescent emergency lighting system indicator 40 may be configured to emit visible light in response to absorbing ultraviolet light. For example, the fluorescent emergency lighting system indicator 40 may be configured to emit visible light in response to absorbing ultraviolet light emitted from the ultraviolet light source 20. The fluorescent emergency light system indicator 40 may be configured to emit a pulse of visible light in response to absorbing a pulse of ultraviolet light emitted from the ultraviolet light source 20. The fluorescent emergency light system indicator 40 may be configured to emit a sequence of pulses of visible light in response to absorbing a sequence of pulses of ultraviolet light emitted from the ultraviolet light source 20.

The fluorescent emergency lighting system indicator 40 may be configured to indicate one or more points of interest within an environment (e.g., emergency equipment).

The fluorescent emergency lighting system indicator 40 may be at least partly phosphorescent and/or electroluminescent. The fluorescent emergency lighting system indicator 40 may comprise electroluminescent paint having visible light emitting pigments such as LIT.

The fluorescent emergency lighting system indicator 40 may be any suitable indicator for use in an environment in which the emergency lighting system 10 is located. For example, the fluorescent emergency lighting system indicator 40 may comprise at least one of a marker, tape, paint or an emergency equipment (e.g., a fire alarm, a fire extinguisher, an emergency luminaire).

The emergency equipment may be integrally formed from one or more fluorescent materials. For example, the emergency equipment may be doped with the one or more fluorescent materials.

The fluorescent emergency lighting system indicator 40 may be located in an environment in which the emergency lighting system 10 is located. The environment may be one or more of a building (e.g., a factory, office building, storage building etc.) or a vehicle (e.g., a boat, plane etc.).

Fluorescent emergency lighting system indicators 40 that are configured to emit visible light in response to absorbing ultraviolet light are discrete (e.g., under normal lighting conditions and/or when not illuminated by UV light) in comparison to indicators that emit visible light in response to absorbing visible light.

The fluorescent emergency lighting system indicator 40 may be configured to indicate evacuation routes from the environment to users (e.g., people within the environment). For example, a plurality of fluorescent emergency lighting system indicators 40 may be located along an evacuation route.

Additionally, or alternatively, the fluorescent emergency lighting system indicator 40 may be configured to indicate the location of one or more objects within the environment such as emergency equipment (e.g., a fire extinguisher, fire alarm). For example, a fluorescent emergency lighting system indicator 40 may be located on and/or near to an object in order to enable a user to locate the object.

A plurality of fluorescent emergency lighting system indicators 40 may include a first fluorescent emergency lighting system indicator 40 that is configured to emit visible light in a first colour and a second fluorescent emergency lighting system indicator 40 that is configured to emit visible light in a second colour (i.e., different from the first colour). This enables different elements of an environment to be categorized to ensure easier identification of the elements to a user. For example, an evacuation route may have one or more fluorescent emergency lighting system indicators 40 of a first colour (e.g., red) and emergency equipment (such as fire extinguishers) may have one or more fluorescent emergency lighting system indicators 40 of a second colour (e.g., green). It should be understood that whilst this example includes the use of an emergency lighting system 10 comprising fluorescent emergency lighting system indicators 40 of two colours, the emergency lighting system 10 may comprise fluorescent emergency lighting system indicators 40 of any suitable numbers of colours (e.g., two or more colours).

The emergency lighting system 10 may comprise additional components that are not shown in FIG. 1. In some examples the emergency lighting system 10 may comprise an auxiliary electrical power supply configured to provide electrical power to the ultraviolet light source 20 (e.g., when the main power supply is interrupted). A plurality of ultraviolet light sources 20 may be collectively powered by a single auxiliary electrical power supply. Each of a plurality of ultraviolet light sources 20 may comprise separate auxiliary electrical power supplies (e.g., each ultraviolet light source 20 may comprise an auxiliary electrical power supply).

The controller 30 may be configured to control the ultraviolet light source 20 to conserve the auxiliary electrical power supply.

In some examples, the emergency lighting system 10 may comprise a sensor configured to detect the remaining capacity of the auxiliary electrical power supply.

The controller 30 may adjust the frequency of the pulses to conserve the electrical power supply. Reducing the frequency of one or more of the light sources of the emergency lighting system 10 reduces the electrical power utilized by the emergency lighting system thereby extending the amount of time for which the emergency lighting system 10 can be activated.

The auxiliary electrical power supply may comprise one or more batteries. The one or more batteries may be configured to be charged by the mains power supply. For example, under normal conditions, the mains power supply may be charging the one or more batteries. Once the mains power supply is interrupted, the one or more batteries provide electrical power to the emergency lighting system 10 (i.e., such that the ultraviolet light source 20 can emit ultraviolet light).

In some examples, the emergency lighting system 10 may comprise one or more visible light sources configured to continuously illuminate the one or more fluorescent emergency lighting system indicators 40. The visible light source may have an illuminance of at least 5 lux (e.g., the minimum required luminance according to the regulatory requirements of the environment such as BS 5266 and BSI 1838). The visible light source may be powered by the auxiliary electrical power supply.

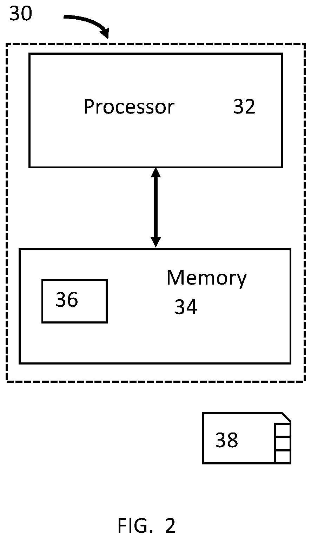

FIG. 2 shows a schematic of a controller 30 suitable for use in an emergency lighting system 10.

The controller 30 may, for example, be a chipset. The illustrated controller 30 in FIG. 2 comprises at least one processor/processing circuitry 32 and at least one memory 34. The controller 30 may be implemented in hardware alone, have certain aspects in software including firmware alone or can be a combination of hardware and software (including firmware).

The processor 32 is configured to read from and write to the memory 34. The processor 32 may also comprise an output interface via which data and/or commands are output by the processor 32 and an input interface via which data and/or commands are input to the processor 32.

The memory 34 stores a computer program 36 comprising computer program instructions (computer program code) that controls the operation of the controller 30 when loaded into the processor 32. The computer program instructions, of the computer program 36, provide the logic and routines that enables the controller 30 to control the ultraviolet light emitted by the ultraviolet light source 20. The computer program instructions, of the computer program 36, may provide the logic and routines that enables the controller 30 to control the sequence of ultraviolet light pulses emitted by the ultraviolet light source 20. The processor 32 by reading the memory 34 is able to load and execute the computer program 36.

As illustrated in FIG. 2, the computer program 36 may arrive at the controller 30 via any suitable delivery mechanism 38. The delivery mechanism 38 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 36. The delivery mechanism may be a signal configured to reliably transfer the computer program 36. The controller 30 may propagate or transmit the computer program 36 as a computer data signal.

The computer program instructions may be comprised in a computer program 36, a non-transitory computer readable medium, a computer program product, a machine readable medium. In some but not necessarily all examples, the computer program instructions may be distributed over more than one computer program 36.

Although the memory 34 is illustrated as a single component/circuitry it may be implemented as one or more separate components/circuitry some or all of which may be integrated/removable and/or may provide permanent/semi-permanent/ dynamic/cached storage.

Although the processor 32 is illustrated as a single component/circuitry it may be implemented as one or more separate components/circuitry some or all of which may be integrated/removable. The processor 32 may be a single core or multi-core processor.

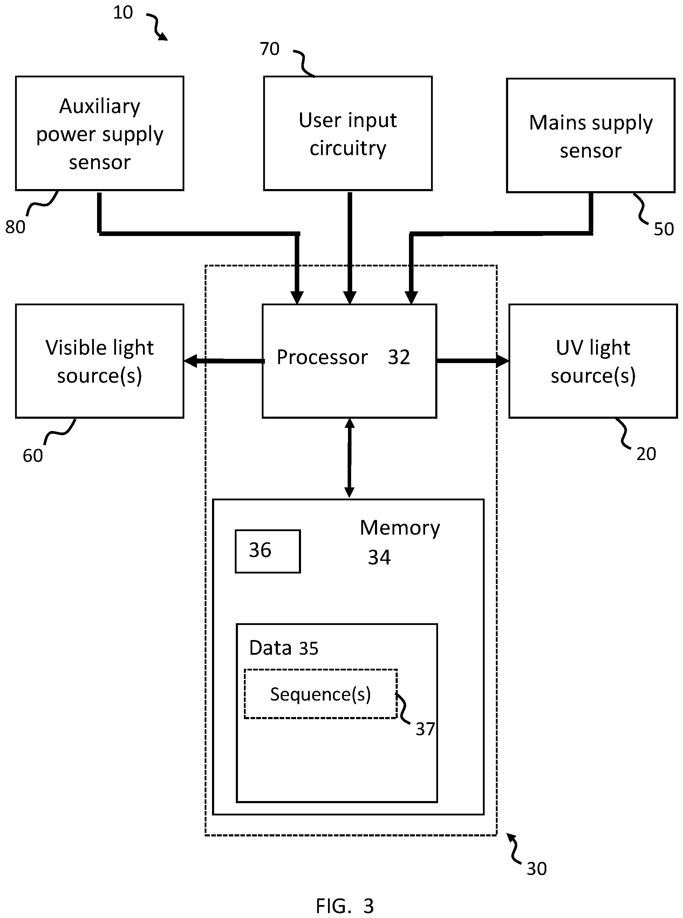

FIG. 3 shows a schematic of an emergency lighting system 10. The emergency lighting system 10 illustrated in FIG. 3 comprises the controller 30 illustrated in FIG. 2. The emergency lighting system 10 further comprises ultraviolet light source(s) 20, visible light source(s) 60, a mains power supply sensor 50, an auxiliary power supply sensor 80 and user input circuitry 70.

Each of the elements 20, 30, 50, 60, 70, 80 are operationally coupled and any number or combination of intervening elements can exist (including no intervening elements). For example, additional electrical circuitry may be present between the processor 32 and each light source 20, 60 to enable the processor 32 to control each light source 20, 60.

The user input circuitry 70 is configured to receive inputs from a user of the emergency lighting system 10. The user input circuitry 70 may comprise means for receiving at least one input from a user. The user may be a person that wishes to configure the emergency lighting system 10 while the emergency lighting system 10 is being installed or maintained. The user input circuitry 70 might, for example, comprise one or more keys and/or one or more buttons. In some embodiments, some or all of the user input circuitry 70 might be integrated with a display (not shown).

The ultraviolet light source(s) 20 and the visible light source(s) 60 are controlled by the processor 32. The processor 32 may control the ultraviolet light source(s) 20 to emit ultraviolet light (e.g., activate and/or deactivate the ultraviolet light source(s) 20). The processor 32 may control a sequence of the ultraviolet light pulses. The processor 32 may adjust the sequence of ultraviolet light pulses to conserve power of the auxiliary electrical power supply.

The processor 32 may activate and/or deactivate the visible light source(s) 60. The processor 32 may adjust the illumination of visible light pulses to conserve power of the auxiliary electrical power supply.

The mains power supply sensor 50 may be configured to detect an interruption to the mains power supply. The mains power supply sensor 50 may be configured to provide information indicating that the mains power supply has been interrupted to the controller 30. In response to determining that the mains power supply has been interrupted, the controller 30 may activate at least one of the ultraviolet light source(s) 20 or the visible light source(s) 60.

The auxiliary power supply sensor 80 may be configured to detect the remaining capacity of the auxiliary power supply. The auxiliary power supply sensor 80 may be configured to provide information indicating the remaining power supply of the auxiliary power supply to the controller 30. The information indicating the remaining power supply of the auxiliary power supply may be at least one of: the amount of time that the emergency lighting system 10 has been activated; the amount of time since the mains power supply was interrupted; or the remaining number of milliampere hours of electrical power remaining in the auxiliary power supply.

The controller 30 may be configured to control the sequences the pulses of ultraviolet light to conserve the auxiliary electrical power supply in response to an input from the auxiliary power supply sensor 80. The controller 30 may be configured to reduce the frequency of the pulses of ultraviolet light to conserve the auxiliary electrical power supply.

It should be understood that other components of the emergency light system 10 can be configured to conserve the auxiliary electrical power supply. For example, a timer being used in an alternative controller 30 may be configured to conserve the auxiliary power supply. For example, the timer may be configured to cause the frequency of the sequence of ultraviolet pulses to decreased based on the emergency lighting system 10 being activated for a threshold period of time (e.g., half the amount of typical time that the auxiliary power supply is configured to illuminate the ultraviolet light source(s) at the first frequency of the sequence of ultraviolet pulses).

The memory 34 may store data 35. The data 35 may include, for example, one or more sequences 37. Each sequence 37 may comprise at least one or more of ultraviolet pulse: illuminance, duration, interval duration, frequency. The sequence(s) 37 may be stored in the memory 34 of the emergency lighting system 10 (i.e., a local memory of the emergency lighting system 10) and/or in a remote memory associated with the emergency lighting system 10 (e.g., a server connected to the emergency lighting system 10). Additionally, or alternatively, the sequence(s) 37 may be determined from information input by a user via the user input circuitry 30.

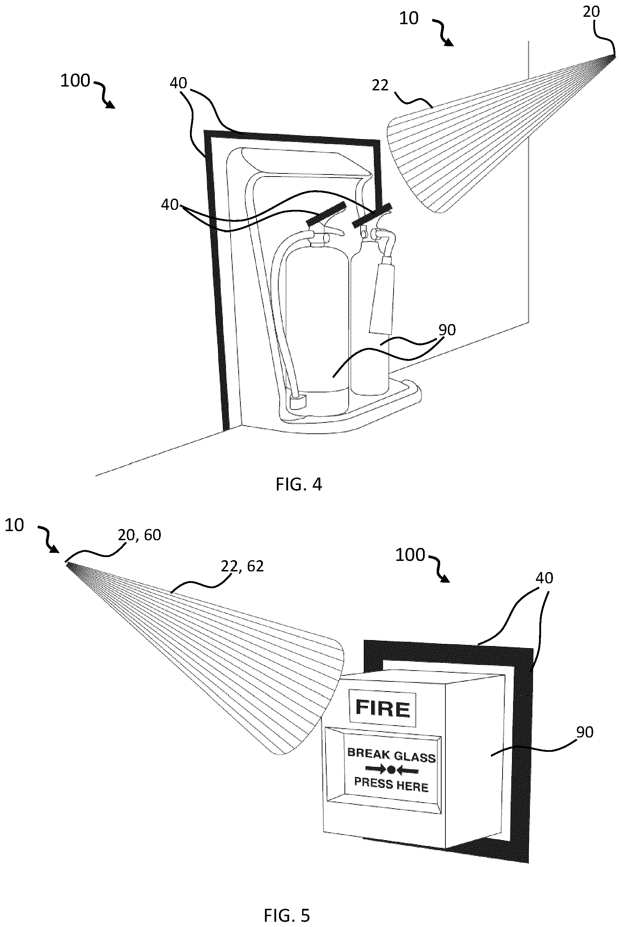

FIG. 4 shows an example environment 100 having an emergency lighting system 10.

An environment 100 may comprise one or more visible light sources (e.g., a normal lighting system) that may be used to illuminate the environment 100. The one or more visible light sources may be powered by a mains power supply (e.g., a mains electrical power supply). For example, under normal conditions, an environment 100 may be illuminated by the one or more visible light sources being powered by the mains power supply.

In some examples, the mains power supply may be interrupted. An interruption of the mains power supply may include the mains power supply being unable to provide electrical power to the normal visible lighting of an environment 100 (e.g., such that a user of the environment should evacuate the environment 100). When the mains power supply is interrupted, the one or more visible light sources may not illuminate the environment 100.

FIG. 4 shows emergency equipment 90 located against a wall of the environment 100. In this example, the emergency equipment 90 are fire extinguishers. Other types of emergency equipment 90 can be used in other examples such as an emergency exit door or an emergency exit luminaire (thereby increasing the visibility of the luminaire). In order to indicate the location of the emergency equipment 90 to users during an interruption of a mains power supply, the emergency equipment 90 comprises a fluorescent emergency lighting system indicator 40.

FIG. 4 shows an emergency lighting system 10 comprising an ultraviolet light source 20 (as described above), a controller 30 (not shown) and a plurality of fluorescent emergency lighting system indicators 40. Each fire extinguisher comprises a fluorescent emergency lighting system indicator 40.

In this example, the fluorescent emergency lighting system indicators 40 are formed from tape. It should be understood that other types of fluorescent emergency lighting system indicators 40 could be used (e.g., paint).

The fluorescent emergency lighting system indicators 40 are located in a position relative to the emergency equipment 90 so that the fluorescent emergency lighting system indicators 40 and/or the emergency equipment 90 are clearly visible to a user. In the example of FIG. 4, the fluorescent emergency lighting system indicators 40 are located on the handle of each of the fire extinguishers. The fluorescent emergency lighting system indicators 40 is located on the handles of the fire extinguishers 90 to indicate the location of the handles to a user.

FIG. 4 also shows a fluorescent emergency lighting system indicator 40 located at the edge of the emergency equipment 90 (i.e., around the frame holding the fire extinguishers). The fluorescent emergency lighting system indicator 40 is paint marked on the wall of the environment 100. It should be understood that other types of fluorescent emergency lighting system indicators 40 could be used (e.g., tape). The fluorescent emergency lighting system indicator 40 is located on the wall around the fire extinguishers 90 to indicate the general location of the fire extinguishers 90 to a user.

The ultraviolet light source 20 is positioned so that ultraviolet light emitted by the ultraviolet light source 20 is directed towards the fluorescent emergency lighting system indicators 40.

In use, the controller 30 may cause the ultraviolet light source 20 to emit ultraviolet light 22. The fluorescent emergency lighting system indicators 40 may absorb at least part of the ultraviolet light 22. The emergency lighting system 40 absorbing the ultraviolet light 22 causes the fluorescent emergency lighting system indicators 40 to emit visible light. The fluorescent emergency lighting system indicators 40 emitting visible light highlights the location of the emergency equipment 90 to a user.

Additionally, or alternatively, in use, the controller 30 may cause the ultraviolet light source 20 to emit ultraviolet light pulses 22. The fluorescent emergency lighting system indicators 40 may absorb at least part of the ultraviolet light pulses 22. The fluorescent emergency lighting system 40 absorbing the ultraviolet light pulses 22 causes the fluorescent emergency lighting system indicators 40 to emit pulses of visible light. The fluorescent emergency lighting system indicators 40 emitting the pulses of visible light highlights the location of the emergency equipment 90 to a user.

FIG. 5 shows an example environment 100 having an emergency lighting system 10. FIG. 5 shows emergency equipment 90 (i.e., a fire alarm) located against a wall. FIG. 5 shows a fluorescent emergency lighting system indicator 40 located at the edge of the emergency equipment 90 (i.e., around the fire alarm). The fluorescent emergency lighting system indicator 40 in this example is paint marked on the wall of the environment 100. It should be understood that other types of fluorescent emergency lighting system indicators 40 could be used (e.g., tape). The paint 40 is located on the wall around the emergency equipment 90 to indicate the general location of the emergency equipment 90 to a user.

The emergency lighting system 10 shown in FIG. 5 further comprises an ultraviolet light source 20 and a visible light source 60 and a controller 30 (not shown). The ultraviolet light source 20 and the visible light source 60 are positioned so that ultraviolet light emitted by the ultraviolet light sources 20 and visible light emitted by the visible light source 60 are directed towards the emergency lighting system indicators 40.

In use, the controller 30 may cause the ultraviolet light source 20 to emit ultraviolet light 22 (e.g., continuous ultraviolet light). The fluorescent emergency lighting system indicators 40 may absorb at least part of the ultraviolet light 22. The fluorescent emergency lighting system 40 absorbing the ultraviolet light 22 causes the fluorescent emergency lighting system indicators 40 to emit visible light. The fluorescent emergency lighting system indicators 40 emitting the pulses of visible light highlights the location of the emergency equipment 90 to a user.

Additionally, or alternatively, in use, the controller 30 may cause the ultraviolet light source 20 to emit ultraviolet light pulses 22. The fluorescent emergency lighting system indicators 40 may absorb at least part of the ultraviolet light pulses 22. The fluorescent emergency lighting system 40 absorbing the ultraviolet light pulses 22 causes the fluorescent emergency lighting system indicators 40 to emit pulses of visible light. The fluorescent emergency lighting system indicators 40 emitting the pulses of visible light highlights the location of the emergency equipment 90 to a user.

Additionally, or alternatively, the controller 30 may cause the visible light source 60 to emit continuous visible light 62. The visible light 62 may illuminate the emergency equipment 90 at an illuminance of at least 5 lux (e.g., the minimum required luminance according to the regulatory requirements of the environment such as BS 5266 and BSI 1838).

The following example relates to a scenario in which, the sequence of pulses of ultraviolet light 22 emitted by the ultraviolet light source 20 shown in FIG. 5 is 1 hertz, the duration of each pulse is 1 second and the interval between each pulse is 1 second. Before the emergency lighting system 10 is activated, the emergency equipment 90 may be illuminated by one or more visible light sources of the normal lighting system of the environment 100. Upon receiving information that the mains power supply has been interrupted, the controller 30 activates the ultraviolet light source 20 and the visible light source 60.

The controller 30 causes the light source 60 to continuously illuminate emergency equipment 90 with visible light.

In the first second after receiving information that the mains power supply has been interrupted, the ultraviolet light source 20 emits a pulse of ultraviolet light for 1 second. In the 2^{nd} second after receiving information that the mains power supply has been interrupted, the ultraviolet light source 20 does not emit a pulse of ultraviolet light. In the third second, the ultraviolet light source 20 emits a further pulse of ultraviolet light for 1 second. The emission of pulses by the ultraviolet light source 20 causes the fluorescent emergency lighting system indicator 40 around the emergency equipment 90 to emit corresponding pulses of visible light. The fluorescent emergency lighting system indicator 40 may therefore appear to a user as flashing such that a user can more easily identify the location of the emergency equipment 90.

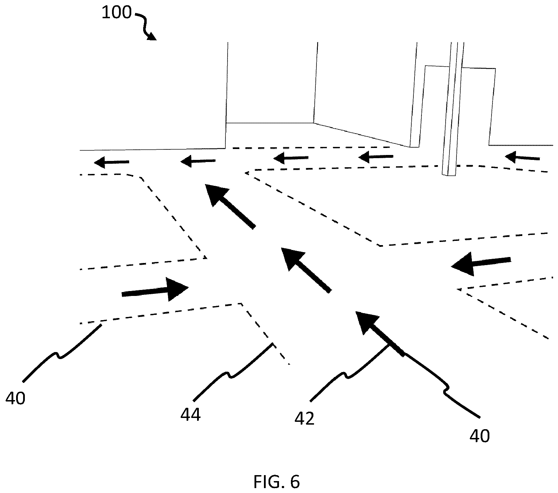

FIG. 6 shows an example environment 100 having fluorescent emergency lighting system indicators 40. In the example of FIG. 6, the fluorescent emergency lighting system indicators 40 comprise a plurality of arrow shaped markers 42 located on the floor of an environment 100. The arrow shaped markers 42 indicate the evacuation routes to be used (e.g., during an interruption to the mains power supply). In the example of FIG. 6, the fluorescent emergency lighting system indicators 40 comprise a path boundary 44 that also indicate the evacuation routes of the environment 100.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one..." or by using "consisting".

In this description, the wording 'connect', 'couple' and 'communication' and their derivatives mean operationally connected/coupled/in communication. It should be appreciated that any number or combination of intervening components can exist (including no intervening components), i.e., so as to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database or another data structure), ascertaining and the like. Also, "determining" can include receiving (for example, receiving information), accessing (for example, accessing data in a memory), obtaining and the like. Also, " determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a', 'an' or `the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or `the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. An emergency lighting system comprising:
one or more ultraviolet light sources configured to emit ultraviolet light and
illuminate one or more fluorescent emergency lighting system indicators; and
a controller configured to control the one or more ultraviolet light sources to emit ultraviolet light.

2. The emergency lighting system of claim 1, wherein the one or more ultraviolet light sources are configured to emit a sequence of ultraviolet light pulses, the ultraviolet light pulses being configured to illuminate the one or more fluorescent emergency lighting system indicators; and
the controller is configured to control the sequence of ultraviolet light pulses, and optionally wherein the controller comprises: at least one processor; and at least one memory including computer program code configured to, with the at least one processor, cause the one or ultraviolet light sources to emit the sequence of ultraviolet light pulses.

3. The emergency lighting system of claim 2, wherein the frequency of the sequence is less than or equal to 20 hertz, and optionally wherein the frequency of the sequence is less than or equal to 10 hertz, and optionally wherein the frequency of the sequence is less than or equal to 5 hertz, and optionally wherein the frequency of the sequence is less than or equal to 2 hertz.

4. The emergency lighting system of claim 2 or 3, wherein the sequence of ultraviolet light pulses comprises each pulse being for the same time period and/or each interval between the pulses being for the same time period.

5. The emergency lighting system of any preceding claim, wherein the emergency lighting system further comprises the one or more fluorescent emergency lighting system indicators, the one or more fluorescent emergency lighting system indicators being configured to emit visible light in response to absorbing ultraviolet light.

6. The emergency lighting system of any preceding claim, further comprising a sensor configured to detect an emergency, and optionally wherein the emergency comprises an interruption of a mains power supply.

7. The emergency lighting system of claim 6, wherein the controller is configured to control the one or more ultraviolet light sources to emit ultraviolet light in response to receiving input from the sensor that is indicative of an emergency, and optionally wherein the controller is configured to activate the one or more ultraviolet light sources in response to receiving the input.

8. The emergency lighting system of any preceding claim, wherein the one or more ultraviolet light sources comprise at least one of: an ultraviolet light emitting diode (LED) or an ultraviolet lamp.

9. The emergency lighting system of any preceding claim, wherein the one or more ultraviolet light sources comprises a filter configured to filter visible light, and optionally wherein the filter is a band-pass filter.

10. The emergency lighting system of claim 5 or any claim dependent thereon, wherein the one or more fluorescent emergency lighting indicators comprise at least one of:
a marker;
tape;
paint; or
an emergency equipment.

11. The emergency lighting system of any preceding claim, further comprising an auxiliary electrical power supply configured to provide electrical power to the one or more ultraviolet light sources, and optionally wherein the auxiliary electrical power supply comprises one or more batteries configured to be charged by a mains power supply.

12. The emergency lighting system of claim 11, wherein the controller is configured to control the one or more ultraviolet light sources to conserve the auxiliary electrical power supply.

13. The emergency lighting system of claim 11 or 12, further comprising a sensor configured to detect the remaining capacity of the auxiliary electrical power supply.

14. The emergency lighting system of claim 12 or 13 when dependent upon claim 2, wherein the controller is configured to reduce the frequency of the pulses of ultraviolet light to conserve the auxiliary electrical power supply.

15. The emergency lighting system of any preceding claim, further comprising one or more visible light sources configured to continuously illuminate the one or more fluorescent emergency lighting system indicators, and optionally wherein the one or more visible light sources have an illuminance of at least 5 lux.
